# EUROPEAN PATENT SPECIFICATION

(11) **EP 2 774 023 B1**
(45) Date of publication and mention of the grant of the patent: **16.05.2018**
(21) Application number: 12846205.8
(22) Date of filing: 01.11.2012
(51) Int. Cl.: G06F 3/01, G06F 3/14, G06F 3/048, G06F 17/40, G06F 9/44, H04L 29/08, G06F 17/30, G06F 21/31, G06F 21/78, H04L 29/06

(54) **USER INTERFACE FOR SAVING DOCUMENTS USING EXTERNAL STORAGE SERVICES**
BENUTZERSCHNITTSTELLE ZUM SPEICHERN VON DOKUMENTEN MITHILFE EXTERNER SPEICHERDIENSTE
INTERFACE UTILISATEUR POUR SAUVEGARDE DE DOCUMENTS AU MOYEN DE SERVICES DE STOCKAGE EXTÉRIEURS

(30) Priority: 02.11.2011 US 201113287937
(43) Date of publication of application: 10.09.2014
(73) Proprietor: Microsoft Technology Licensing, LLC, Redmond, WA 98052 (US)
(72) Inventor: YANG, Chenguang, Redmond, Washington 98052-6399 (US); VON HADEN, Kyle, Redmond, Washington 98052-6399 (US); WALTMAN, David, Redmond, Washington 98052-6399 (US); BENDIG, Krista, Redmond, Washington 98052-6399 (US); ROGERS, March, Redmond, Washington 98052-6399 (US)
(74) Representative: Grünecker Patent- und Rechtsanwälte PartG mbB
(86) International application number: PCT/US2012/063058
(87) International publication number: WO 2013/067176

(56) References cited:
- US-A1- 2003 115 226
- US-A1- 2005 177 580
- US-A1- 2008 104 393
- US-A1- 2008 184 138
- US-A1- 2009 089 341
- Mauro Huc: "How to save Microsoft Office 2010 documents to Skydrive", , 2 February 2011 (2011-02-02), pages 1-13, XP055190347, Retrieved from the Internet: URL:http://pureinfotech.com/2011/02/02/how -to-save-microsoft-office-2010-documents-t o-skydrive/ [retrieved on 2015-05-20]
- Anonymous: "View Your Browsing History - Internet Explorer 7 Misc", , 22 August 2010 (2010-08-22), pages 1-2, XP055190189, Retrieved from the Internet: URL:https://web.archive.org/web/2010082204 2140/http://malektips.com/internet_explore r_7_0009.html [retrieved on 2015-05-19]
- 'Quickoffice ® Pro HD for AndroidOS User Help Guide' QUCKOFFICE PRO HD FOR ANDROID OS VERSION 5.0 USER HELP GUIDE. 2010, pages 12 - 15, XP055154761

## Description

### BACKGROUND

Cloud computing services provide software, data access and storage services to various users over the Internet. As these services continue to gain popularity, users of various computing devices (e.g., smartphones, tablet computers, laptop computers and the like) may wish to save and/or share documents and data using these cloud computing services. Current user interfaces are ill-equipped to address the various possibilities a user may have when saving documents using cloud computing services.

It is with respect to these and other general considerations that embodiments have been made. Also, although relatively specific problems have been discussed, it should be understood that the embodiments should not be limited to solving the specific problems identified in the background.

### SUMMARY

This summary is provided to introduce a selection of concepts in a simplified form that are further described below in the Detail Description section. This summary is not intended to identify key features or essential features of the claimed subject matter, nor is it intended to be used as an aid in determining the scope of the claimed subject matter. The invention is defined by the independent claims.

Embodiments of the present disclosure provide a user interface that enables a user to more readily identify and use one or more storage services (e.g., cloud computing storage services or local storage services) to save, open and/or retrieve documents and other data. The method includes receiving user credentials from a user that identify (i) a particular user and (ii) various storage services, available either locally on the computing device or externally, such as, for example, cloud computing storage services. In response to a request to save a document, a list of available storage services is provided to the user. In certain embodiments, the list of storage services includes at least one external storage service. Once the list of storage services is determined, the list of storage services is presented to user via a user interface. The user may select a storage service from the list, including a location within the selected service, at which to save the document. The document is then saved, at the specified location, using the selected storage service.

Embodiments may be implemented as a computer process, a computing system or as an article of manufacture such as a computer program product or computer readable media. The computer program product may be computer storage media readable by a computer system and encoding a computer program of instructions for executing a computer process. The computer program product may also be a propagated signal on a carrier readable by a computing system and encoding a computer program of instructions for executing a computer process.

### BRIEF DESCRIPTION OF THE DRAWINGS

Non-limiting and non-exhaustive embodiments are described with reference to the following figures.
FIG. 1 illustrates a system for saving a document to a particular location using either a local storage service or an external storage service according to one or more embodiments.
FIG. 2 illustrates a method for saving a document to a particular location using either a local storage service or an external storage service according to one or more embodiments.
FIGS. 3A, 3B, 4 and 5 illustrate exemplary user interfaces for saving a document to a particular location using either a local storage service or an external storage service according to one or more embodiments.
FIG. 6 illustrates an exemplary user interface for opening a document that has been saved to a particular location according to one or more embodiments.
FIG. 7 illustrates a block diagram of a computing environment suitable for implementing embodiments disclosed herein.

### DETAILED DESCRIPTION

Various embodiments are described more fully below with reference to the accompanying drawings, which form a part hereof, and which show specific exemplary embodiments. However, embodiments may be implemented in many different forms and should not be construed as limited to the embodiments set forth herein; rather, these embodiments are provided so that this disclosure will be thorough and complete, and will fully convey the scope of the embodiments to those skilled in the art. Embodiments may be practiced as methods, systems or devices. Accordingly, embodiments may take the form of a hardware implementation, an entirely software implementation or an implementation combining software and hardware aspects. The following detailed description is, therefore, not to be taken in a limiting sense.

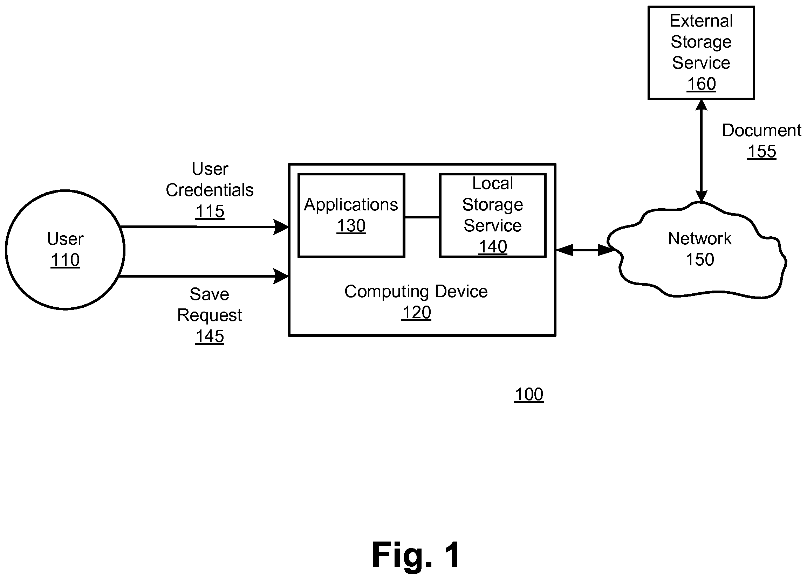

FIG. 1 illustrates a system 100 for saving a document to a particular location using either a local storage service 140 or an external storage service 160. More particularly, the system 100 may be used to present a friendly user interface that prominently displays various storage services (e.g., local storage service 140 and external storage services 160) and various save locations within each of the storage services to the user. Because the various storage services and locations within each storage service are displayed in prominence, the user may be better able to determine locations at which particular documents are being saved.

As shown in FIG. 1, the system 100 includes a computing device 120. The computing device 120 may be a desktop or laptop computer, tablet computer, smartphone, personal digital assistant and the like. Among other components, the computing device 120 includes an operating system that executes one or more applications 130. The applications 130 may be word processing applications, spreadsheet applications, database applications, and the like. In certain embodiments, the applications 130 (including one or more recently used lists described below) may include browser-based applications that enable a user to edit and/or save documents accessed using a browser or other web-based application. Accordingly, each application 130 may enable a user to create, open and store documents or other work product. As will be explained in detail below, when a user wishes to save a document or other data, the user may choose to save the document using the local storage service 140 or the external storage service 160.

As shown in FIG. 1, the computing device 120 may include one or more local storages services 140 that enable a user to locally save a document. For example, using the local storage service 140, a user may save a document in a particular location (e.g., a particular folder) on a hard drive or another storage device that is physically connected to the computing device 120, such as, for example a USB storage device. The computing device 120 may also be configured to access one or more external storage services 160 using a network connection 150, so as to enable the user 110 to save documents 155 using the one or more external storage services 160.

In certain embodiments, the operating system of the computing device 120 may require a user 110 to provide user credentials 115 to log in to the operating system. The user credentials 115 may include a user name and password, or other input, that is associated with and identifies the particular user 110. For example, the user credentials 115 may include a WINDOWS LIVE ID, an email username and password, an organization ID, an operating system log on ID etc. In another embodiment, the operating system may not require user credentials 115. However, the user 110 may be required to provide user credentials 115 to one or more applications in order to either (i) utilize one of the applications 130, (ii) utilize one or more features of the applications 130, or (iii) utilize the external storage service 160 to save documents generated from one of the applications 130. In an embodiment, the user 110 may use single sign-on credentials which enable the user 110 to access (i) the operating system, (ii) the applications 130, and (iii) the external storage service 160. Because the credentials are single sign-on credentials, the user 110 may be required to enter the credentials 115 at a single point in time. Thereafter, the user 110 has access to all authorized applications 130 and features, including one or more external storage services 160. Alternatively, different user credentials 115 may be required for (i) the operating system, (ii) one or more of the applications 130, and (iii) the external storage service 160.

In certain embodiments, the external storage service 160 may be a cloud computing storage service, a file hosting service, or other such service offered by a third party. Examples of such services include SKYDRIVE, SHAREPOINT and MySite by Microsoft Corporation of Redmond, Washington, DROPBOX by Officeware Corporation, and the like. Although specific examples have been given, it is contemplated that other external storage services may be used with embodiments disclosed herein.

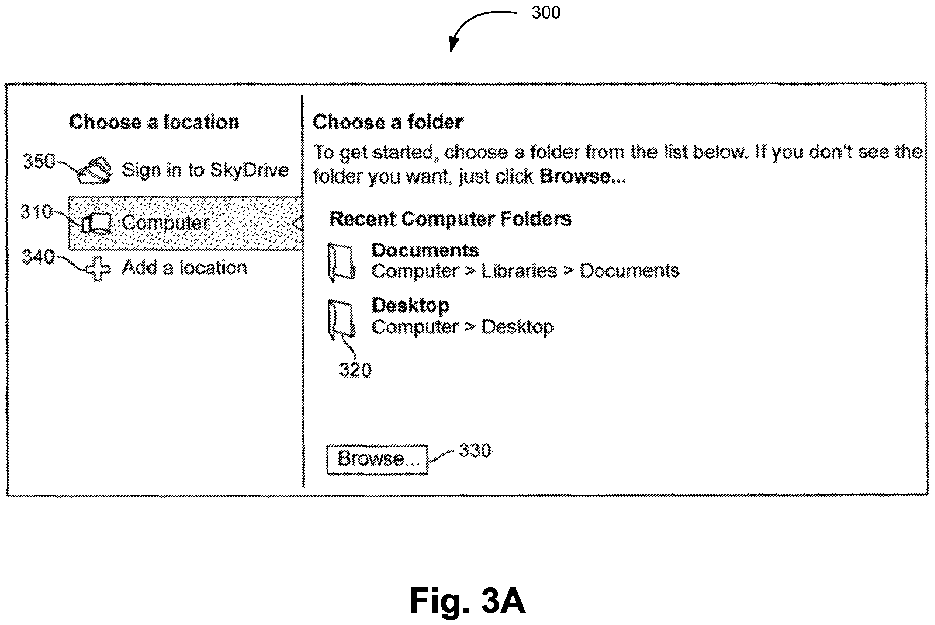

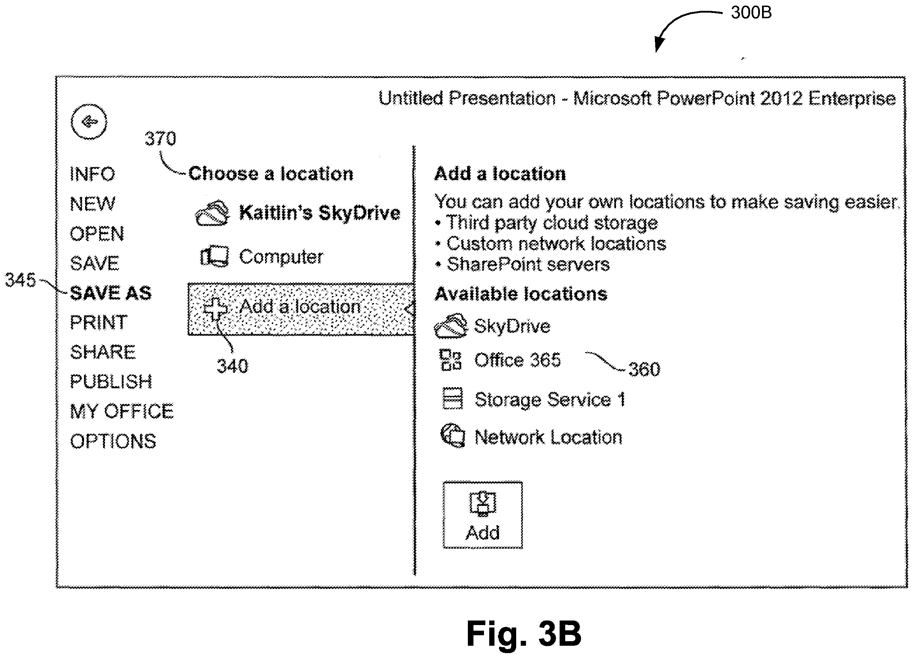

The external storage service 160 enables a user to save a document in a particular location in response to save request 145. When the save request 145 is received, the user interface provides the user 110 with one or more locations to which the user may save the document. For example, the user interface may display one or more folders within the external storage service 160 that a user may access in order to save documents therein. Additionally, the user 110 may create a new location, such as a new folder within the selected storage service. As shown in FIGS 3-5, each document, folder, or location, as well as the storage service being used (e.g., which external storage service 160 or local storage service 140), is provided to the user 110 via the user interface. More particularly, each storage service and location is displayed in prominence on the user interface, which enables the user 110 to more easily determine where the document 155 is being saved.

The user interface may also display to the user 110 a list of (i) most recently used documents, (ii) most recently used folders or locations within the selected storage service, or (iii) popular folders or locations. In certain embodiments, the most recently used lists may be stored locally. In another embodiment, the most recently used lists may be stored remotely. In an embodiment, each list may be ordered based on (i) a time stamp associated with the document or folder, or (ii) a number of times the document or folder has been accessed by the user 110. In the event that one of the lists associated with a particular storage service is empty (e.g., the user 110 has not previously used the external storage service 160 or does not have any documents 155 saved on the external storage service 160), the list may be prepopulated with one or more default folders or locations, such as, for example, a "My Documents" folder.

According to one or more embodiments, one or more lists may be associated with a particular external storage service 160. Thus, if a user 110 is utilizing multiple external storage services, each external storage service 160 maintains a separate list, such as a most recently used list. Additionally, each external storage service 160 is associated with a particular user's user credentials 115. Therefore, when a user submits his user credentials 115, each external storage service 160 that is associated with the user's user credentials 115, along with its associated list, is available to the user. This holds true whether the user logs in to a desktop computer at home or at work, a smartphone, tablet computer etc.

For example, if the user 110 logs in to his desktop computer and accesses an external storage service 160 using his user credentials 115, this same external storage service 160, and its associated lists if any, may be accessed by the user 110 when the user 110 logs in to a second device (e.g., tablet computer, laptop etc.). Such features are further provided in U.S. Patent Application No. 13/287933 (MS# 333802.01) entitled "Selective Roaming Lists" that was filed on November 2, 2011.

In another embodiment, the list of external storage services that are available to the user may be different based on a server that is accessed by the user. For example if a user logs in to a first server, the user may have access to a first set of external storage services and if a user logs in to a second server, the user may have access to a second set of external storage services.

In certain embodiments, the applications 130 and the external storage service 160 need not be provided by the same entity. For example, the word processing application may be provided by a first entity while the external storage service 160 is provided by a second entity. In such cases, the user interface, which may be associated with a particular application 130, may provide an option whereby the external storage service 160 is associated with one or more of (i) the application 130 in use, or (ii) the user credentials 115 submitted by the user 110. Thus, when the user 110 subsequently uses the application 130, the external storage service 160 is available for use.

The computing device 120 may also include a local storage service 140 which enables the user 110 to save documents 155 locally on a hard drive or other storage device that is physically attached to the computing device 120. As with the external storage service 160, when a save request 145 is received and the local storage service 140 is being utilized, the local storage service 140 enables the user to choose a particular folder or location (e.g., desktop) in which to save the document. The local storage service 140 may also provide one or more lists of most recently used documents and locations such as described above. Additionally, and as shown in FIGS 3-5, each document, folder, or location, as well as the storage service being used, is provided to the user 110 via the user interface. More particularly, each storage service and location is displayed in prominence on the user interface which enables the user 110 to more easily determine where the document 155 is being saved.

Regardless of whether the local storage service 140 or the external storage service 160 is used to save a document 155, when a save request 145 is received, a determination is made as to where the document that is to be saved was most recently (i) saved to, or (ii) accessed from. The determined location, whether on the external storage service 160 or the local storage service 140, is set as a default save location. When a subsequent save request is received, the document 155 is saved at the default location. In another embodiment, the default save location may be a location, either locally or externally, that the user 110 utilizes a majority of the time (e.g., a "My Documents" folder).

As discussed above, a user 110 may be required to submit user credentials 115 when accessing either (i) the operating system, or (ii) applications 130 of the computing device 120. However, there are instances when the user is not required to enter such credentials. If a user has not entered user credentials 115 and subsequently submits a save request 145 when using one of the applications 130, the user may be prompted, via a user interface, to provide user credentials 115. If user credentials 115 are presented, and if the user 110 has access to one or more external storage service 160 using the credentials 115, those external storage services 160, along with the lists associated therewith, are provided to the user 110 via a user interface. It is also contemplated that lists of most recently used documents saved in local storage services 140 may be provided to the user 110, via the user interface, upon receipt of user credentials 115 if such lists were not previously available.

It is contemplated that a user 110 may not have access to, or have signed up for, an external storage service 160. In such cases, when a save request 145 is received, the user 110 may be prompted, via add logic in the user interface, to set up an account with one or more external storage services 160. For example, if the user 110 would like to associate one or more external storage services 160 with his user credentials 115, the user 110 may activate add logic functionality (e.g., an add location button on the user interface or the like) and select one or more external storage services 160 that are available for use. Once the user 110 has provided his user credentials 115 to the external storage service 160, the external storage service 160 may associated with and accessed by the user 110 each time the user 110 submits his user credentials 115 to the computing device 120 or applications 130.

In certain embodiments, an administrator of the system 100 may determine which external storage services 160 a user 110 may or may not use. For example, the administrator may restrict access to one or more external services 160 based on the user credentials 115.

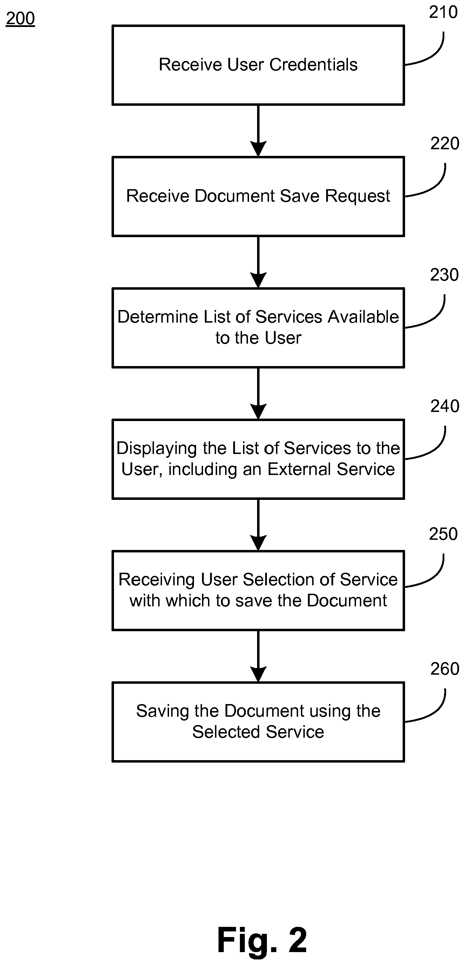

FIG. 2 illustrates a method 200 for saving a document using either a local storage service or an external storage service according to one or more embodiments. For example, a user, such as user 110 (FIG. 1) may employ the method 200 to save one or more documents 155 using either a local storage service 140 or an external storage service 160 described above with respect to FIG. 1.

Method 200 begins at operation 210 where user credentials are received, e.g., by an operating system of the computing device 120 or by one or more applications 130. In certain embodiments, the user may not be required to submit user credentials prior to accessing the operating system or one or more of the applications. However, if the user wishes to have access to one or more external storages services, the user may be required to submit user credentials prior to gaining access to the service and/or recently used lists associated with a particular service. As discussed with respect to FIG. 1, in certain embodiments, the user may use single sign-on credentials which enable a user to access the operating system and applications the user is authorized to use.

Flow continues to operation 220 in which a document save request is received e.g., by the computing device. In response to the document save request, a list of available storage services (e.g., local storage services and external storage services) is determined 230 and provided to the user 240. In certain embodiments, the list of available storage services includes one or more external storage services that are available to, or accessible by, the user. As discussed, the available storage services, and recently used lists associated with each service, may be provided to the user when the computing device receives the user's user credentials. In an embodiment, the list of available storage services and the list of recently used documents are maintained locally on the computing device. In another embodiment, the list of available storage services and the list of most recently used documents are maintained remotely. In still yet another embodiment, one list (e.g., the available local storage services and associated recently used lists) may be maintained locally while a second list (e.g., the available external storages services and associated recently used lists) are maintained remotely. Therefore, the user may have access to each list of available servers regardless of the user's location. In certain embodiments, the list of available services and the list of most recently used documents and/or folders associated with each service are provided to the user in a user interface. Exemplary embodiments of such user interfaces is provided in FIGS. 3A, 3B, 4 and 5 which will be described below.

Referring to FIG. 3A, FIG. 3A illustrates an exemplary user interface 300 for saving a document according to one or more embodiments. As shown in FIG. 3A, a user interface 300 may include a local storage service 310 which enables documents to be stored locally (e.g., the "Computer") on a hard drive of the computing device. The local storage service may also enable a user to select one or more locations or folders 320 within a selected storage service in which to save the document.

As shown, the available storage services, either local storage services 310 or external storage services 350, along with locations or folders 320 for each service, are prominently displayed on the user interface 300. This enables a user to more easily track which documents are being saved by which service, and further, which locations in the selected service is storing the document. For example, in FIG. 3A, the user has selected a local storage service 310 in which to save a document. As a result of the user selecting the local storage service 310, the user interface 300 also displays a list of most recently used folders (e.g., "Recent Computer Folders") of the local storage service 310. Although not shown, the user interface may also show a list of most recently used documents that have been stored in the local storage service.

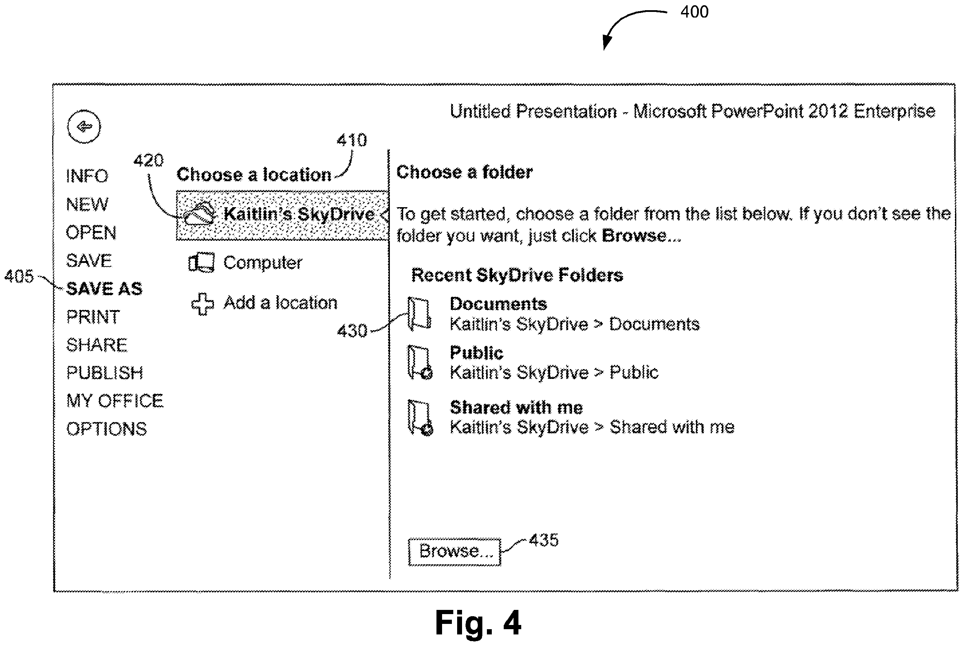

In certain embodiments, each local storage service and external storage service that is utilized by the user maintains a separate list of most recently used documents, folders, and/or locations. Therefore, as a user selectively navigates between one storage services (e.g., local storage service 310 and "SkyDrive" 420 (FIG. 4)), the list of most recently used documents, locations and/or folders is updated accordingly.

In situations where the user's most recently used list is empty (e.g., as a result of a user not having previously accessed a particular service), the user interface may automatically populate the most recently used list with various default locations, such as, for example, a "My Documents" folder. In certain embodiments, both the local storage service and the remote storage service may utilize such functionality. The user interface 300 may also include browsing functionality 330 that enables a user to search for other locations (e.g., additional folders) on the selected service that are not displayed.

The user interface 300 may also enable a user to utilize an add a location feature 340. The add location feature enables the user to add one or more services (either local services or remote services) to the user interface 300. Referring to FIG. 3B, in response to a save request (e.g., "Save As" request 345), and in response to a user selecting the "Add a location" 340 functionality, the user interface 300B displays a list of one or more storage services 360 that may be available to the user. As shown in FIG. 3B, the user has provided user credentials and has signed in as "Kaitlin". As a result, the user interface 300B displays "Kaitlin's SkyDrive" as an available external storage service and also presents the user with additional available storage services 360. As discussed above, the list of available storage services 360 may be based on permissions set by an administrator of the system. In certain embodiments, when the user selects and adds a new service, the new service is associated with the user credentials and will appear in the locations section 370 of the user interface 300B.

When attempting to add a new service via the user interface 300, the user need only provide user credentials associated with the new service, assuming the user has had previous interaction with the selected new service. Once the credentials for the selected service have been verified, the new service is associated with the user's user credentials. Thereafter, each time the user submits his user credentials, the new storage service is available for use. If however, the user does not have access to the new service (e.g., the user does not have a pre-existing account with the service), the user interface 300B may prompt the user to set up an account with the new storage service. Once the account has been verified, the user's user credentials may be associated with the new service. Thereafter, each time the user submits his user credentials, the new storage service is available for use.

Referring back to FIG. 2, once the list of services, including an external service, has been displayed to the user, flow proceeds to operation 250 in which the computing device receives user selection of a service, and a location within the selected service (e.g., a particular location or folder), at which to save the document. Once the selection is made, flow proceeds to operation 260 where the document is saved in the selected location of the selected service.

Referring to FIG. 4, FIG. 4 illustrates an exemplary user interface 400 for saving a document using either an external storage service or a local storage service according to one or more embodiments. The exemplary user interface 400 may be displayed in response to user selection of a storage service as was described above.

As shown in FIG. 4, in response to a save request (e.g., "Save As" 405) the user interface 400 displays a list 410 of the external storage services and local storage services that are available to the user. In this example, the user has selected "Kaitlin's SkyDrive" 420 which represents an external storage service. In this example, the user (e.g., Kaitlin) has provided identifying user credentials. As a result of providing the user credentials, Kaitlin has access to her external storage service. In certain embodiments, the association between the user's user credentials and available external storage services is maintained remotely. Therefore, regardless of the location or device on which the user provides her user credentials, the user may have access to the external storage service and the list of most recently used documents or locations associated with the external storage service.

In response to the selection, the user interface 400 displays recent "SkyDrive" folders. The user may select one of the displayed folders, or alternatively, choose a different folder using a browse feature 435. Once the desired location has been selected, the user may save the document in the desired location of the selected service. So as to avoid user confusion, all available storage services, including the selected service (e.g., "Kaitlin's SkyDrive" 420) and the recent locations 430 associated with the selected storage service, are shown prominently on the user interface 400.

In certain embodiments, the list of recent locations 430, as well as one or more recently accessed documents from each location, is a global list that may be accessed and updated across all computers and devices regardless of which computer or device the user was logged in to when a document or location was accessed. Thus, if a user accesses a first location using a first machine and accesses a second location on a second machine, both locations will be displayed to a user during a subsequent log in.

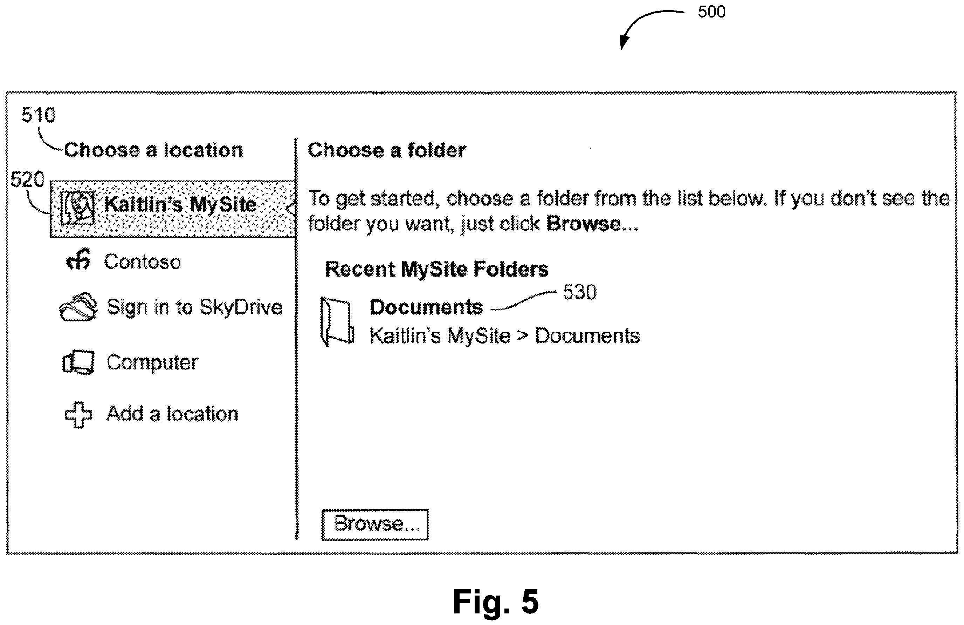

Referring to FIG. 5, in certain embodiments, when a save request is received, the user interface 500 may present a default save location. The default save location may be used in a local storage service setting or an external storage service setting. In certain embodiments, the default location is only used when a user is saving a newly created document (e.g., a document with no previous save location or associations). However, it is contemplated that a default location may be used when a user saves documents other than new documents. For example, if a user opens a document that was saved at a first location and wants to save the document in a different location, the user may submit a save request that indicates the user's desire to move the document to a new location (e.g., using a "Save As" function). In response to the save request, the user interface may present the default save location, and/or a default storage service, to the user even if such default save location is different from the location in which the document was last saved.

As shown in the user interface 500, this particular user has a number of locations 510 available in which to save the document. In this example, the default location has been set to "Kaitlin's MySite" 520. As also shown, "Kaitlin's MySite" 520 has a "Documents" folder 530 associated therewith. Therefore, the user may (i) save the document in the "Documents" folder 530 (or a sub-folder associated with the "Documents" folder 530), (ii) browse for a new folder within "Kaitlin's MySite" 520, or (iii) select another service from the list of available services 510.

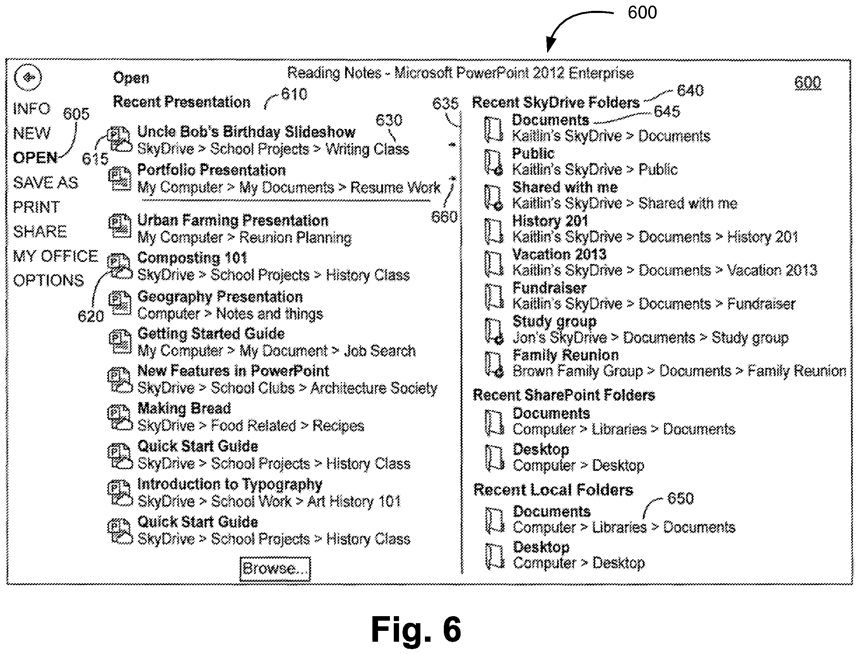

FIG. 6 illustrates an exemplary user interface 600 for opening a document that has been saved to a particular location according to one or more embodiments. Although embodiments described herein have primarily focused on saving documents to particular locations using one or more storage services, the features disclosed herein may also be used to open a document that has been saved to a particular location using a particular storage service. In certain embodiments, when a document is opened using, for example, user interface 600, the document and/or location that was accessed using the user interface 600 may also be displayed on a recently used list on a save user interface (not shown) and vice versa. Thus, regardless of whether a document or location was accessed in a save user interface or an open user interface, that location and/or document may be displayed on the user interface when accessed by the user. As with saving a document, it is contemplated that when a document is opened, particularly from an external service, the user has provided user credentials such as described above. It is also contemplated that the user has access to one or more external storage services.

As shown in FIG. 6, in response to an open request 605, the user interface 600 presents to the user a list 610 of most recently used documents 620. The list 610 also includes a list of pinned documents 615, which will be discussed in greater detail below. In certain embodiments, the most recently used documents 620 are associated with a particular application (e.g., word processing application). In alternative embodiments, the user interface 600 may present a list of all recently used documents 620 regardless of which application utilizes that particular document or document format. Thus, the list 610 of most recently used documents may contain documents from a variety of applications. In response to a user selecting one of the documents that is not supported by the application in which the open request was received, the computing device may execute the application associated with the selected document and display the contents of that document to the user.

The user interface 600 may also prominently display a list of most recently used folders or locations 640 from each available storage service. The user interface 600 may also prominently display a file path for each location. For example, user interface 600 shows a recent "SkyDrive" folder entitled "Documents" 645, which is located in "Kaitlin's SkyDrive > Documents." Additionally, the list of recently used folders or locations 640 also shows a recent local folder entitled "Documents" 650 which has been saved locally on the computing device. As shown, the user interface 600 clearly displays the file path associated with the locally stored "Documents" 650 folder (e.g., "Computer > Libraries > Documents").

As briefly discussed, when displaying the list 610 of most recently used documents 620, the user interface 600 also displays a file path 630 of where the recently used document 620 is stored. For example, "Uncle Bob's Birthday Slideshow" is saved in "SkyDrive > School Project > Writing Class" and "Portfolio Presentation" has a file path of "My Computer > My Documents > Resume Work." Identification of the file path may enable a user to more readily identify which services the user has access to and further enables the user to identify where the document is being stored. Such identification may be helpful in the event that one or more documents, folders, or locations have identical names or identifiers.

In certain embodiments, the user interface 600 also includes a scroll bar 635 that may be used to show either (i) additional most recently used documents, or (ii) additional recently used folders that are associated with various storage services 640.

The user interface 600 may also include one or more pins 660. In certain embodiments, a pin 660 enables a user selected document or folder to be placed at or near the top of a most recently used list 610. As shown in FIG. 6, two documents have been pinned to the pinned list 615 and are located at the top of the list 610. When a document or folder is pinned to the pinned list 615, the document or folder is removed from the recently used documents list 620 and added to the pinned list 615. Thus, in embodiments, there will be no duplicates between the pinned list 615 and the documents list 620. When the document or folder is unpinned from the pinned list 615, the document or folder is removed from the pinned list 615 and the location of the document or folder is unhidden from the list of documents 620 which, in certain embodiments, is sorted by the date/time of last access.

Although specific functionality has been given with respect to the user interface 600 of FIG. 6, it is contemplated the features described with respect to FIG. 6 may be implemented by the user interfaces described with respect to FIGS. 3A-5. For example, the one or more pins 660 in the open user interface 660 may also be provided on a save user interface. Additionally, the one or more pins 660 may be maintained when the user switches between an open user interface and a close user interface. Similarly, the features described above with respect to FIGS. 3A-5 may be used in implementations shown and described with respect to FIG. 6.

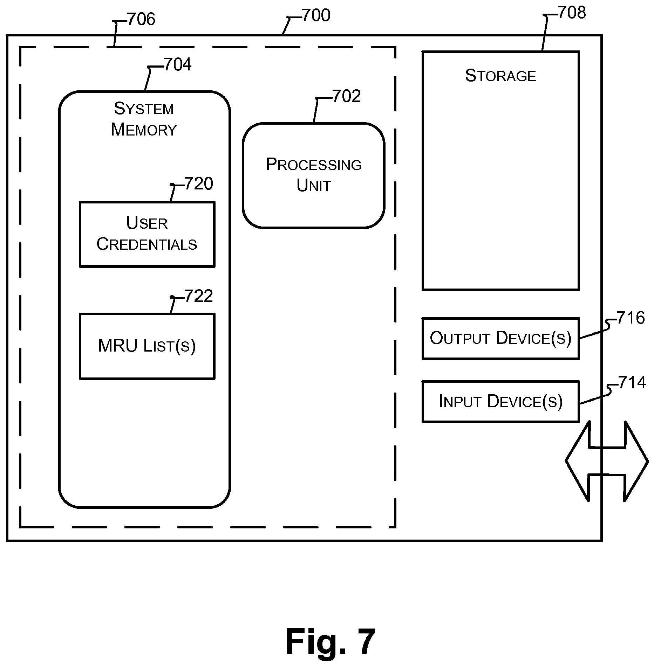

FIG. 7 illustrates a general computer system 700, which can be used to implement the embodiments described herein. The computer system 700 is only one example of a computing environment and is not intended to suggest any limitation as to the scope of use or functionality of the computer and network architectures. Neither should the computer system 700 be interpreted as having any dependency or requirement relating to any one or combination of components illustrated in the example computer system 700. In embodiments, system 700 may be used as the computing device 120 described above with respect to FIG. 1.

In its most basic configuration, system 700 typically includes at least one processing unit 702 and memory 704. Depending on the exact configuration and type of computing device, memory 704 may be volatile (such as RAM), non-volatile (such as ROM, flash memory, etc.) or some combination. This most basic configuration is illustrated in FIG. 7 by dashed line 706. System memory 704 stores instructions 720, such as the instructions to associate user credentials with one or more storage services, and data 722 such user credential associations and most recently used lists that may be stored in a file storage system with storage such as storage 708.

The term computer readable media as used herein may include computer storage media. Computer storage media may include volatile and nonvolatile, removable and non-removable media implemented in any method or technology for storage of information, such as computer readable instructions, data structures, program modules, or other data. System memory 704, removable storage, and non-removable storage 708 are all computer storage media examples (e.g. memory storage). Computer storage media may include, but is not limited to, RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other medium which can be used to store information and which can be accessed by computer system 700. Any such computer storage media may be part of computer system 700. Computer system 700 may also have input device(s) 714 such as a keyboard, a mouse, a pen, a sound input device, a touch input device, etc. In another embodiment, the computer system 700 may be coupled to a camera (not shown) that may be operative to record a user and capture motions and/or gestures made by a user. Consistent with other embodiments described herein, the camera may comprise any motion detection device capable of detecting the movement of the user. For example, the camera may comprise a Microsoft® Kinect® motion capture device comprising a plurality of cameras and a plurality of microphones. Output device(s) 716 such as a display, speakers, a printer, etc. may also be included. The aforementioned devices are examples and others may be used.

The term computer readable media as used herein may also include communication media. Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

Embodiments disclosed may be practiced via a system-on-a-chip (SOC) where each or many of the components illustrated in FIG. 7 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to providing continuous access to a resource may operate via application-specific logic integrated with other components of the computing device/system 700 on the single integrated circuit (chip).

Reference has been made throughout this specification to "one embodiment" or "an embodiment," meaning that a particular described feature, structure, or characteristic is included in at least one embodiment. Thus, usage of such phrases may refer to more than just one embodiment. Furthermore, the described features, structures, or characteristics may be combined in any suitable manner in one or more embodiments.

One skilled in the relevant art may recognize, however, that the embodiments may be practiced without one or more of the specific details, or with other methods, resources, materials, etc. In other instances, well known structures, resources, or operations have not been shown or described in detail merely to avoid obscuring aspects of the embodiments.

While example embodiments and applications have been illustrated and described, it is to be understood that the embodiments are not limited to the precise configuration and resources described above. Various modifications, changes, and variations apparent to those skilled in the art may be made in the arrangement, operation, and details of the methods and systems disclosed herein without departing from the scope of the claimed embodiments.

## Claims

1. A method for saving a document, the method comprising:
receiving user credentials that are associated with sign in information of a user (210); receiving a request to save a document (220); in response to receiving the request to save the document, determining a list of storage services that are available to the user (230), wherein the list of storage services is based, at least in part, on the user credentials, and wherein at least one storage service of the list of storage services is an external storage service;
displaying the list of storage services (240); adding an external storage service to the list of storage services in response to the user utilizing an add functionality enabling the user to add one or more services to the list;
receiving user selection of the added external storage service from the list of storage services;
displaying a list of most recently used locations of the selected external storage service; and
in response to receiving a user selection of a location within the selected external storage service, initiating a save of the document in the selected location;
wherein each external storage service is associated with a particular user's user credentials once the user has provided his user credentials to the external storage service, and when a user submits his user credentials, each external storage service that is associated with the user's user credentials along with the lists associated therewith are available to the user via a user interface; and
wherein each external storage service maintains a separate list of most recently used locations.

2. The method of claim 1, wherein the external storage service is a third party storage service.

3. The method of claim 2, wherein the third party storage service is a cloud storage service.

4. The method of claim 2, wherein the third party storage service is manually added to the list of storage services based on information received from the user.

5. A computer-readable storage medium encoding computer executable instructions that, when executed by at least one processor, perform a method for saving a document, the method comprising:
receiving user credentials that are associated with sign in information of a user (210); receiving a request to save a document (220); in response to receiving the request to save the document, determining a list of storage services that are available to the user (230), wherein the list of storage services is based, at least in part, on the user credentials, and wherein at least one storage service of the list of storage services is an external storage service;
displaying the list of storage services (240); adding an external storage service to the list of storage services in response to the user utilizing an add functionality enabling the user to add one or more services to the list;
receiving user selection of the added external storage service from the list of storage services;
displaying a list of most recently used locations of the selected external storage service; and
in response to receiving a user selection of a location within the selected external storage service, initiating a save of the document in the selected location
wherein each external storage service is associated with a particular user's user credentials once the user has provided his user credentials to the external storage service, and when a user submits his user credentials, each external storage service that is associated with the user's user credentials along with the lists associated therewith are available to the user via a user interface; and
wherein each external storage service maintains a separate list of most recently used locations.

6. The computer-readable storage medium of claim 5, wherein the list of most recently used locations is maintained on a server.

7. The computer-readable storage medium of claim 5, wherein the sign in information is sign in information for an operating system.

8. The computer-readable storage medium of claim 5, wherein the sign in information is sign in information for an application which generates the document.

9. A computer system for saving documents, the system comprising:
one or more processors; and
a memory coupled to the one or more processors, the memory for storing instructions which, when executed by the one or more processors, causes the one or more processors to perform a method, the method comprising:
receiving user credentials that are associated with sign in information of a user (210); receiving a request to save a document (220); in response to receiving the request to save the document, determining a list of storage services that are available to the user (230), wherein the list of storage services is based, at least in part, on the user credentials, and wherein at least one storage service of the list of storage services is an external storage service;
displaying the list of storage services (240); adding an external storage service to the list of storage services in response to the user utilizing an add functionality enabling the user to add one or more services to the list;
receiving user selection of the added external storage service from the list of storage services;
displaying, in prominence on a user interface, the selected external storage service and a list of most recently used locations of the selected external storage service; and
in response to receiving a user selection of a location within the selected external storage service, initiating a save of the document in the selected location;
wherein each external storage service is associated with a particular user's user credentials once the user has provided his user credentials to the external storage service, and when a user submits his user credentials, each external storage service that is associated with the user's user credentials along with the lists associated therewith are iravailable to the user via a user interface; and
wherein each external storage service maintains a separate list of most recently used locations.

10. The computer system claim 9, wherein a one or more folders associated with selected storage service is displayed in prominence on the user interface.

## Patentansprüche

1. Verfahren zur Sicherung eines Dokuments, wobei das Verfahren umfasst:
Empfangen von Benutzerreferenzen, die Anmeldeinformationen eines Benutzers (210) zugeordnet sind;
Empfangen einer Anforderung zum Sichern eines Dokuments (220);
Festlegen, als Antwort auf das Empfangen der Anforderung zum Sichern des Dokuments, einer Liste von Speicherungsdiensten, die für den Benutzer (230) verfügbar sind,
wobei die Liste von Speicherungsdiensten zumindest teilweise auf den Benutzerreferenzen basiert, und wobei zumindest ein Speicherungsdienst der Liste von Speicherungsdiensten ein externer Speicherungsdienst ist;
Anzeigen der Liste von Speicherungsdiensten (240);
Hinzufügen eines externen Speicherungsdienstes zur Liste von Speicherungsdiensten als Antwort auf den Benutzer, der eine Additionsoperationsfunktionalität nutzt, die es dem Benutzer ermöglicht, der Liste einen oder mehrere Dienste hinzuzufügen;
Empfangen einer Benutzerauswahl des hinzugefügten externen Speicherungsdienstes aus der Liste von Speicherungsdiensten;
Anzeigen einer Liste von vor ganz kurzer Zeit verwendeten Speicherplätzen des ausgewählten externen Speicherungsdienstes; und
Initiieren, als Antwort auf das Empfangen einer Benutzerauswahl eines Speicherplatzes innerhalb des ausgewählten externen Speicherungsdienstes, einer Sicherung des Dokuments in dem ausgewählten Speicherplatz;
wobei jeder externe Speicherungsdienst Benutzerreferenzen eines speziellen Benutzers zugeordnet sind, sobald der Benutzer seine Benutzerreferenzen dem externen Speicherungsdienst bereitgestellt hat, und wenn ein Benutzer seine Benutzerreferenzen vorbringt, jeder externe Speicherungsdienst, der den Benutzerreferenzen eines Benutzers zugeordnet ist, zusammen mit den damit verbundenen Listen dem Benutzer über eine Benutzerschnittstelle verfügbar sind; und
wobei jeder externe Speicherungsdienst eine getrennte Liste von vor ganz kurzer Zeit verwendeten Speicherplätzen aufbewahrt.

2. Verfahren nach Anspruch 1, wobei der externe Speicherungsdienst ein Speicherungsdienst Dritter ist.

3. Verfahren nach Anspruch 2, wobei der Speicherungsdienst Dritter ein Cloudspeicherungsdienst ist.

4. Verfahren nach Anspruch 2, wobei der Speicherungsdienst Dritter der Liste von Speicherungsdiensten basierend auf vom Benutzer empfangenen Informationen manuell hinzugefügt wird.

5. Computerlesbares Speichermedium, das computerausführbare Anweisungen kodiert, die bei Ausführung durch mindestens einen Prozessor ein Verfahren zur Sicherung eines Dokuments durchführen, wobei das Verfahren umfasst:
Empfangen von Benutzerreferenzen, die Anmeldeinformationen eines
Benutzers (210) zugeordnet sind;
Empfangen einer Anforderung zum Sichern eines Dokuments (220);
Festlegen, als Antwort auf das Empfangen der Anforderung zum Sichern des Dokuments, einer Liste von Speicherungsdiensten, die für den Benutzer (230) verfügbar sind,
wobei die Liste von Speicherungsdiensten zumindest teilweise auf den Benutzerreferenzen basiert, und wobei zumindest ein Speicherungsdienst der Liste von Speicherungsdiensten ein externer Speicherungsdienst ist;
Anzeigen der Liste von Speicherungsdiensten (240);
Hinzufügen eines externen Speicherungsdienstes zur Liste von Speicherungsdiensten als Antwort auf den Benutzer, der eine Additionsoperationsfunktionalität nutzt, die es dem Benutzer ermöglicht, der Liste einen oder mehrere Dienste hinzuzufügen;
Empfangen einer Benutzerauswahl des hinzugefügten externen Speicherungsdienstes aus der Liste von Speicherungsdiensten;
Anzeigen einer Liste von vor ganz kurzer Zeit verwendeten Speicherplätzen des ausgewählten externen Speicherungsdienstes; und
Initiieren, als Antwort auf das Empfangen einer Benutzerauswahl eines Speicherplatzes innerhalb des ausgewählten externen Speicherungsdienstes, einer Sicherung des Dokuments in dem ausgewählten Speicherplatz;
wobei jeder externe Speicherungsdienst Benutzerreferenzen eines speziellen Benutzers zugeordnet sind, sobald der Benutzer seine Benutzerreferenzen dem externen Speicherungsdienst bereitgestellt hat, und wenn ein Benutzer seine Benutzerreferenzen vorbringt, jeder externe Speicherungsdienst, der den Benutzerreferenzen eines Benutzers zugeordnet ist, zusammen mit den damit verbundenen Listen dem Benutzer über eine Benutzerschnittstelle verfügbar sind; und
wobei jeder externe Speicherungsdienst eine getrennte Liste von vor ganz kurzer Zeit verwendeten Speicherplätzen aufbewahrt.

6. Computerlesbares Speichermedium nach Anspruch 5, wobei die Liste von vor ganz kurzer Zeit verwendeten Speicherplätzen auf einem Server aufbewahrt wird.

7. Computerlesbares Speichermedium nach Anspruch 5, wobei die Anmeldeinformationen die Anmeldeinformationen für ein Betriebssystem sind.

8. Computerlesbares Speichermedium nach Anspruch 5, wobei die Anmeldeinformationen die Anmeldeinformationen für eine Anwendung sind, die das Dokument generiert.

9. Computersystem zur Sicherung von Dokumenten, wobei das System umfasst:
einen oder mehrere Prozessoren; und
einen Speicher, der mit dem einen oder mehreren Prozessoren verbunden ist, der Speicher zum Speichern von Anweisungen, der bei Ausführung durch den einen oder mehrere Prozessoren, veranlasst, dass der eine oder mehrere Prozessoren ein Verfahren durchführen, wobei das Verfahren umfasst:
Empfangen von Benutzerreferenzen, die Anmeldeinformationen eines Benutzers (210) zugeordnet sind;
Empfangen einer Anforderung zum Sichern eines Dokuments (220);
Festlegen, als Antwort auf das Empfangen der Anforderung zum Sichern des Dokuments, einer Liste von Speicherungsdiensten die für den Benutzer (230) verfügbar sind,
wobei die Liste von Speicherungsdiensten zumindest teilweise auf den Benutzerreferenzen basiert, und wobei mindestens ein Speicherungsdienst der Liste von Speicherungsdiensten ein externer Speicherungsdienst ist;
Anzeigen der Liste von Speicherungsdiensten (240);
Hinzufügen eines externen Speicherungsdienstes zur Liste von Speicherungsdiensten als Antwort auf den Benutzer, der eine Additionsoperationsfunktionalität nutzt, die es dem Benutzer ermöglicht, der Liste einen oder mehrere Dienste hinzuzufügen;
Empfangen einer Benutzerauswahl des hinzugefügten externen Speicherungsdienstes aus der Liste von Speicherungsdiensten;
Anzeigen, im Vordergrund auf einer Benutzerschnittstelle, des ausgewählten externen Speicherungsdienstes und einer Liste von vor ganz kurzer Zeit verwendeten Speicherplätzen des ausgewählten externen Speicherungsdienstes ist; und
Initiieren, als Antwort auf das Empfangen einer Benutzerauswahl eines Speicherplatzes innerhalb des ausgewählten externen Speicherungsdienstes, einer Sicherung des Dokuments in dem ausgewählten Speicherplatz;
wobei jeder externe Speicherungsdienst Benutzerreferenzen eines speziellen Benutzers zugeordnet sind, sobald der Benutzer seine Benutzerreferenzen dem externen Speicherungsdienst bereitgestellt hat, und wenn ein Benutzer seine Benutzerreferenzen vorbringt, jeder externe Speicherungsdienst, der Benutzerreferenzen des Benutzers zugeordnet ist, zusammen mit den damit verbundenen Listen dem Benutzer über eine Benutzerschnittstelle verfügbar sind; und
wobei jeder externe Speicherungsdienst eine getrennte Liste von vor ganz kurzer Zeit verwendeten Speicherplätzen aufbewahrt.

10. Computersystem nach Anspruch 9, wobei ein oder mehrere, dem ausgewählten Speicherungsdienst zugeordnete Ordner im Vordergrund auf der Benutzerschnittstelle angezeigt werden.

## Revendications

1. Procédé pour un enregistrement d'un document, le procédé comprenant :
réception d'accréditations d'utilisateur qui sont associées à des informations de connexion d'un utilisateur (210) ;
réception d'une demande d'enregistrement d'un document (220) ;
en réponse à une réception de la demande d'enregistrement du document, détermination d'une liste de services de stockage qui sont disponibles pour l'utilisateur (230),
dans lequel la liste de services de stockage repose, au moins en partie, sur les accréditations d'utilisateur, et dans lequel au moins un service de stockage de la liste de services de stockage est un service de stockage externe ;
affichage de la liste de services de stockage (240) ;
ajout d'un service de stockage externe à la liste de services de stockage en réponse à l'utilisateur utilisant une fonction d'ajout autorisant l'utilisateur à ajouter un ou plusieurs services à la liste ;
réception d'une sélection d'utilisateur du service de stockage externe ajouté à partir de la liste de services de stockage ;
affichage d'une liste d'emplacements les plus récemment utilisés du service de stockage externe sélectionné ; et
en réponse à une réception d'une sélection d'utilisateur d'un emplacement au sein du service de stockage externe sélectionné, initialisation d'un enregistrement du document à l'emplacement sélectionné ;
dans lequel chaque service de stockage externe est associé à des accréditations d'utilisateur d'un utilisateur particulier une fois que l'utilisateur a fourni ses accréditations d'utilisateur au service de stockage externe, et lorsqu'un utilisateur soumet ses accréditations d'utilisateur, chaque service de stockage externe qui est associé aux accréditations d'utilisateur de l'utilisateur ainsi que les listes associées sont disponibles pour l'utilisateur via une interface utilisateur ; et
dans lequel chaque service de stockage externe tient à jour une liste séparée d'emplacements les plus récemment utilisés.

2. Le procédé de la revendication 1, dans lequel le service de stockage externe est un service de stockage tiers.

3. Le procédé de la revendication 2, dans lequel le service de stockage tiers est un service de stockage en Cloud.

4. Le procédé de la revendication 2, dans lequel le service de stockage tiers est ajouté manuellement à la liste de services de stockage en fonction d'informations reçues de l'utilisateur.

5. Support de stockage lisible par un ordinateur encodant des instructions exécutables par un ordinateur qui, lorsqu'exécutées par au moins un processeur, exécutent le procédé d'enregistrement d'un document, le procédé comprenant :
réception d'accréditations d'utilisateur qui sont associées à des informations de connexion d'un utilisateur (210) ;
réception d'une demande d'enregistrement d'un document (220) ;
en réponse à une réception de la demande d'enregistrement du document, détermination d'une liste de services de stockage qui sont disponibles pour l'utilisateur (230),
dans lequel la liste de services de stockage repose, au moins en partie, sur les accréditations d'utilisateur, et dans lequel au moins un service de stockage de la liste de services de stockage est un service de stockage externe ;
affichage de la liste de services de stockage (240) ;
ajout d'un service de stockage externe à la liste de services de stockage en réponse à l'utilisateur utilisant une fonction d'ajout autorisant l'utilisateur à ajouter un ou plusieurs services à la liste ;
réception d'une sélection d'utilisateur du service de stockage externe ajouté à partir de la liste de services de stockage ;
affichage d'une liste d'emplacements les plus récemment utilisés du service de stockage externe sélectionné ; et
en réponse à une réception d'une sélection d'utilisateur d'un emplacement au sein du service de stockage externe sélectionné, initialisation d'un enregistrement du document à l'emplacement sélectionné
dans lequel chaque service de stockage externe est associé à des accréditations d'utilisateur d'un utilisateur particulier une fois que l'utilisateur a fourni ses accréditations d'utilisateur au service de stockage externe, et lorsqu'un utilisateur soumet ses accréditations d'utilisateur, chaque service de stockage externe qui est associé aux accréditations d'utilisateur de l'utilisateur ainsi que les listes associées sont disponibles à l'utilisateur via une interface utilisateur ; et
dans lequel chaque service de stockage externe tient à jour une liste séparée d'emplacements les plus récemment utilisés.

6. Le support de stockage lisible par un ordinateur de la revendication 5, dans lequel la liste des emplacements les plus récemment utilisés est tenue à jour sur un serveur.

7. Le support de stockage lisible par un ordinateur de la revendication 5, dans lequel les informations de connexion sont des informations de connexion pour un système d'exploitation.

8. Le support de stockage lisible par un ordinateur de la revendication 5, dans lequel les informations de connexion sont des informations de connexion pour une application qui génère le document.

9. Système informatique d'enregistrement de documents, le système comprenant :
un ou plusieurs processeurs ; et
une mémoire couplée à l'un ou plusieurs processeurs, la mémoire étant destinée à un stockage d'instructions qui, lorqu'exécutées par l'un ou plusieurs processeurs, font exécuter à l'un ou plusieurs processeurs un procédé, le procédé comprenant :
réception d'accréditations d'utilisateur qui sont associées à des informations de connexion d'un utilisateur (210) ;
réception d'une demande d'enregistrement d'un document (220) ;
en réponse à une réception de la demande d'enregistrement du document, détermination d'une liste de services de stockage qui sont disponibles pour l'utilisateur (230),
dans lequel la liste des services de stockage repose, au moins en partie, sur les accréditations d'utilisateur, et dans lequel au moins un service de stockage de la liste des services de stockage est un service de stockage externe ;
affichage de la liste de services de stockage (240) ;
ajout d'un service de stockage externe à la liste de services de stockage en réponse à l'utilisateur utilisant une fonction d'ajout autorisant l'utilisateur à ajouter un ou plusieurs services à la liste ;
réception d'une sélection d'utilisateur du service de stockage externe ajouté à partir de la liste de services de stockage ;
affichage, de manière proéminente dans une interface utilisateur, du service de stockage externe sélectionné et d'une liste d'emplacements les plus récemment utilisés du service de stockage externe sélectionné ; et
en réponse à une réception d'une sélection d'utilisateur d'un emplacement au sein du service de stockage externe sélectionné, initialisation d'un enregistrement du document à l'emplacement sélectionné ;
dans lequel chaque service de stockage externe est associé à des accréditations d'utilisateur d'un utilisateur particulier une fois que l'utilisateur a fourni ses accréditations d'utilisateur au service de stockage externe, et lorsqu'un utilisateur soumet ses accréditations d'utilisateur, chaque service de stockage externe qui est associé aux accréditations d'utilisateur de l'utilisateur ainsi que les listes associées sont disponibles pour l'utilisateur via une interface utilisateur ; et
dans lequel chaque service de stockage externe tient à jour une liste séparée d'emplacements les plus récemment utilisés.

10. Le système informatique de la revendication 9, dans lequel un ou plusieurs dossiers associés au service de stockage sélectionné s'affichent de manière proéminente dans l'interface utilisateur.
